# EUROPEAN PATENT APPLICATION

(11) **EP 4 794 433 A1**
(43) Date of publication of application: **19.08.2026**
(21) Application number: 24876561.2
(22) Date of filing: 09.10.2024
(51) Int. Cl.: H04W 72/52, H04W 84/06

(54) **CSI-RS CONFIGURATION METHOD AND APPARATUS, SATELLITE BASE STATION, AND UE**

(30) Priority: 12.10.2023 CN 202311326945
(71) Applicant: Shanghai Satellite Network Research Institute Co., Ltd., Shanghai 201204 (CN)
(72) Inventor: LIU, Xianling, Shanghai 201204 (CN); YAN, Hong, Shanghai 201204 (CN); XU, Xiaofan, Shanghai 201204 (CN); LI, Jifeng, Shanghai 201204 (CN); ZHOU, Wen, Shanghai 201204 (CN)
(74) Representative: Santarelli
(86) International application number: PCT/CN2024/123775
(87) International publication number: WO 2025/077748

(57) **Abstract**

Embodiments of the present application provide a CSI-RS configuration method and apparatus, a satellite base station, and a UE. The method is applied to a satellite base station, and including: determining the number of UEs activated at multiple beam positions and a service load of the satellite base station within a target detection period; on the basis of the number of UEs activated at the multiple beam positions and the service load, determining CSI-RS configuration modes corresponding to the multiple beam positions, wherein the CSI-RS configuration modes each comprise periodic CSI-RS configuration and sending a CSI-RS along with a service; and on the basis of the CSI-RS configuration modes corresponding to the multiple beam positions of the satellite base station, determining a CSI-RS configuration mode for the satellite base station. By using dynamic CSI-RS configuration, on the basis of the number of UEs activated and the service load within the target detection period, the CSI-RS configuration modes suitable for the multiple beam positions are determined, and then the CSI-RS configuration modes corresponding to the multiple beam positions of the satellite base station are integrated to determine the CSI-RS configuration mode suitable for the satellite base station more reasonably, reducing the waste of resources when the load is light and the occurrence of an increase in resources when the load is heavy.

## Description

### CROSS-REFERENCE TO RELATED APPLICATIONS

The present application claims priority of Chinese Patent Application No. 202311326945.8, filed on October 12, 2023 with the State Intellectual property Office of the people's republic of China, and entitled "CSI-RS CONFIGURATION METHOD AND APPARATUS, SATELLITE BASE STATION, AND STORAGE MEDIUM", the application of which is incorporated by reference herein in its entirety.

### TECHNICAL FIELD

Embodiments of the present application relate to the technical field of communications, and in particular to a CSI-RS configuration method and apparatus, a satellite base station and a UE.

### BACKGROUND

A Channel State Information Reference Signal (CSI-RS) is a reference signal of a 5th-Generation Mobile Communication Technology (5G) network in downlink, mainly for downlink channel detection and channel measurement. A terminal calculates Reference Signal Receiving Power (RSRP) and Signal to Interference plus Noise Ratio (SINR Ratio) by measuring the CSI-RS, and reports a Channel Quality Indicator (CQI) to a base station. The base station selects a Modulation and Coding Scheme (MCS) of the 5G terminal by referring to the CQI reported by the terminal, which influences the transmission mode of downlink codebook, and decides an actual user experience rate. Therefore, coverage of the CSI-RS directly affects downlink user experience.

For a ground base station, its network coverage radius is usually several hundred meters, so that in order to save downlink time-frequency resources, the CSI-RS is designed to be a cell-level beam wider than a Synchronization Signal and PBCH Block (SSB), and a certain number of CSI-RS beams can cover the whole cell.

For a satellite base station, since satellite communication is limited by a large coverage range and transmitting power of satellite phased array, it is difficult that a single channel covers wide beams at a plurality of beam footprints. In the related art, all beam footprints in a cell are covered by means of periodic scanning.

However, in the above scheme, each beam footprint needs to be configured with a set of time-frequency resources, that is, as many beam footprints as there are, as many sets of CSI-RS time-frequency resources are needed, so that the CSI-RS configuration is unreasonable, possibly resulting in waste of time-frequency resources.

### SUMMARY

The embodiments of the present application provide a CSI-RS configuration method and apparatus, a satellite base station and a UE, for reasonably performing CSI-RS configuration.

In a first aspect, an embodiment of the present application provides a first CSI-RS configuration method, applied to a satellite base station, including: determining activated numbers of User Equipments (UEs) and service loads at a plurality of beam footprints of the satellite base station, in a target detection period; determining CSI-RS configuration modes corresponding to the plurality of beam footprints based on the activated numbers of UEs and the service loads at the plurality of beam footprints, where, the CSI-RS configuration modes include a periodic CSI-RS configuration and a configuration of CSI-RS transmitted accompanying service transmission; and determining a CSI-RS configuration mode of the satellite base station according to the CSI-RS configuration modes corresponding to the plurality of beam footprints of the satellite base station.

In one or more embodiments, the determining CSI-RS configuration modes corresponding to the plurality of beam footprints based on the activated numbers of UEs and the service loads at the plurality of beam footprints includes: in a case where an activated number of UEs at a first beam footprint is greater than a preset number, and/or a service load at the first beam footprint is greater than a preset load, determining that a CSI-RS configuration mode corresponding to the first beam footprint is the periodic CSI-RS configuration; or, in a case where the activated number of UEs at the first beam footprint is not greater than the preset number and the service load at the first beam footprint is not greater than the preset load, determining that the CSI-RS configuration mode corresponding to the first beam footprint is the configuration of CSI-RS transmitted accompanying service transmission.

In one or more embodiments, the determining a CSI-RS configuration mode of the satellite base station according to the CSI-RS configuration modes corresponding to the plurality of beam footprints of the satellite base station includes: determining, for the satellite base station, a beam footprint proportion of beam footprints corresponding to the periodic CSI-RS configuration to the plurality of beam footprints; in a case where the beam footprint proportion is greater than a preset proportion, determining that the CSI-RS configuration mode of the satellite base station is the periodic CSI-RS configuration; or in a case where the beam footprint proportion is not greater than the preset proportion, determining that the CSI-RS configuration mode of the satellite base station is the configuration of CSI-RS transmitted accompanying service transmission.

In one or more embodiments, the CSI-RS configuration method further includes: after determining the CSI-RS configuration mode of the satellite base station, determining whether the CSI-RS configuration mode of the satellite base station is the same as a current CSI-RS configuration of the satellite base station; and if not, adjusting the current CSI-RS configuration of the satellite base station.

In one or more embodiments, the adjusting the current CSI-RS configuration of the satellite base station includes: in a case where the CSI-RS configuration mode of the satellite base station is the periodic CSI-RS configuration, adjusting the CSI-RS configuration modes of the plurality of beam footprints of the satellite base station to the periodic CSI-RS configuration, after a first time period; or in a case where the CSI-RS configuration mode of the satellite base station is the configuration of CSI-RS transmitted accompanying service transmission, adjusting the CSI-RS configuration modes of the plurality of beam footprints of the satellite base station to the configuration of CSI-RS transmitted accompanying service transmission, after a second time period.

In one or more embodiments, the CSI-RS configuration modes of the plurality of beam footprints of the satellite base station are adjusted to the periodic CSI-RS configuration and the CSI-RS configuration method further includes: determining periodic CSI-RS resources corresponding to a UE according to ephemeris information and a position of the UE; and sending the periodic CSI-RS resources to the UE through Radio Resource Control (RRC) reconfiguration; and the CSI-RS configuration modes of the plurality of beam footprints of the satellite base station are adjusted to the configuration of CSI-RS transmitted accompanying service transmission and the CSI-RS configuration method further includes: sending frequency information of CSI-RS to a UE through Radio Resource Control (RRC) reconfiguration, and sending a sending time of the CSI-RS to the UE through Downlink Control Information (DCI).

In one or more embodiments, the CSI-RS configuration method further includes: before the determining activated numbers of User Equipments (UEs) and service loads at a plurality of beam footprints of the satellite base station, in a target detection period, determining whether historical configuration information exists, in response to the satellite base station is turned on; in a case where the historical configuration information exists and a current time is in a historical detection period in the historical configuration information, configuring the satellite base station to a CSI-RS configuration mode corresponding to the historical configuration information; or in a case where the historical configuration information does not exist, or the current time is not in the historical detection period in the historical configuration information, configuring the satellite base station to a preset CSI-RS configuration mode.

In a second aspect, an embodiment of the present application provides a second CSI-RS configuration method, applied to a UE, including: reporting a Channel Quality Indicator (CQI) to a satellite base station based on a CSI-RS configuration mode of the satellite base station; where the satellite base station determines the CSI-RS configuration mode by: determining activated numbers of User Equipments (UEs) and service loads at a plurality of beam footprints of the satellite base station, in a target detection period; determining CSI-RS configuration modes corresponding to the plurality of beam footprints based on the activated numbers of UEs and the service loads at the plurality of beam footprints, where the CSI-RS configuration modes include a periodic CSI-RS configuration and a configuration of CSI-RS transmitted accompanying service transmission; and determining the CSI-RS configuration mode of the satellite base station according to the CSI-RS configuration modes corresponding to the plurality of beam footprints of the satellite base station.

In one or more embodiments, the CSI-RS configuration method further includes: in a case where the CSI-RS configuration mode is the periodic CSI-RS configuration, before reporting the CQI to the satellite base station, receiving periodic CSI-RS resources sent by the satellite base station through Radio Resource Control (RRC) reconfiguration; where the periodic CSI-RS resources is determined by the satellite base station according to ephemeris information and a position of the UE.

In one or more embodiments, the CSI-RS configuration method further includes: in a case where the CSI-RS configuration mode is the configuration of CSI-RS transmitted accompanying service transmission, before reporting the CQI to the satellite base station, receiving frequency information of CSI-RS sent by the satellite base station through RRC reconfiguration; and receiving a sending time of the CSI-RS sent by the satellite base station through Downlink Control Information (DCI).

In a third aspect, an embodiment of the present application provides a first CSI-RS configuration apparatus, applied to a satellite base station, including a beam footprint information determining module configured to, determine activated numbers of User Equipments (UEs) and service loads at a plurality of beam footprints of the satellite base station, in a target detection period; a beam footprint configuration determining module configured to, determine CSI-RS configuration modes corresponding to the plurality of beam footprints based on the activated numbers of UEs and the service loads at the plurality of beam footprints, where, the CSI-RS configuration modes include a periodic CSI-RS configuration and a configuration of CSI-RS transmitted accompanying service transmission; and a CSI-RS configuring module configured to, determine a CSI-RS configuration mode of the satellite base station according to the CSI-RS configuration modes corresponding to the plurality of beam footprints of the satellite base station.

In a fourth aspect, an embodiment of the present application provides a second CSI-RS configuration apparatus, applied to a UE, including: a reporting module configured to, report a Channel Quality Indicator (CQI) to a satellite base station based on a CSI-RS configuration mode of the satellite base station; where the satellite base station determines the CSI-RS configuration mode by: determining activated numbers of User Equipments (UEs) and service loads at a plurality of beam footprints of the satellite base station, in a target detection period; determining CSI-RS configuration modes corresponding to the plurality of beam footprints based on the activated numbers of UEs and the service loads at the plurality of beam footprints, where the CSI-RS configuration modes include a periodic CSI-RS configuration and a configuration of CSI-RS transmitted accompanying service transmission; and determining the CSI-RS configuration mode of the satellite base station according to the CSI-RS configuration modes corresponding to the plurality of beam footprints of the satellite base station.

In a fifth aspect, an embodiment of the present application provides a satellite base station, including at least one processor and at least one memory, where the least one memory stores a computer program which, when executed by the at least one processor, causes the at least one processor to perform the CSI-RS configuration method according to any one of the above first aspect.

In a sixth aspect, an embodiment of the present application provides a UE including at least one processor and at least one memory, where the at least one memory stores a computer program which, when executed by the at least one processor, causes the at least one processor to perform the CSI-RS configuration method according to any one of the above second aspect.

In a seventh aspect, an embodiment of the present application provides a computer-readable storage medium having stored thereon a computer program executable by a processor which, when executed by the processor, causes the processor to perform the CSI-RS configuration method according to any one of the above first aspect or second aspect.

In the above solutions, by using dynamic CSI-RS configuration, the CSI-RS configuration modes suitable for the plurality of beam positions are determined according to the activated numbers of UEs and the service loads in the target detection period, and then the CSI-RS configuration modes corresponding to the plurality of beam positions of the satellite base station are integrated to determine the CSI-RS configuration mode suitable for the satellite base station more reasonably, and flexible switching is performed between the periodic CSI-RS configuration and the configuration of CSI-RS transmitted accompanying service transmission, reducing the waste of resources when the load is light and the occurrence of an increase in resources when the load is heavy.

### BRIEF DESCRIPTION OF THE DRAWINGS

In order to more clearly illustrate the technical solutions in the embodiments of the present application, the drawings required to be used in the description of the embodiments will be briefly introduced below, and it is apparent that the drawings in the description below are only some embodiments of the present application, and it is obvious for those skilled in the art that other drawings may be obtained based on these drawings without creative efforts.
FIG. 1 is a schematic diagram of CSI-RS beam configuration in a ground base station according to an embodiment of the present application;
FIG. 2 is a schematic diagram of a UE-level CSI-RS time-frequency resource according to an embodiment of the present application;
FIG. 3 is a schematic flow diagram of a first CSI-RS configuration method according to an embodiment of the present application;
FIG. 4 is a schematic diagram of configuration of CSI-RS transmitted accompanying service transmission according to an embodiment of the present application;
FIG. 5 is a schematic diagram of time-frequency resource for configuration of CSI-RS transmitted accompanying service transmission according to an embodiment of the present application;
FIG. 6 is a schematic flow diagram of a second CSI-RS configuration method according to an embodiment of the present application;
FIG. 7 is a schematic flow diagram of a third CSI-RS configuration method according to an embodiment of the present application;
FIG. 8 is a schematic flow diagram of a fourth CSI-RS configuration method according to an embodiment of the present application;
FIG. 9 is a schematic structural diagram of a CSI-RS configuration apparatus according to an embodiment of the present application;
FIG. 10 is a schematic structural diagram of a satellite base station according to an embodiment of the present application.

### DETAILED DESCRIPTION

In order to make the objectives, technical solutions and advantages of the present application more apparent, the present application will be described in further detail with reference to the accompanying drawings. Apparently, the described embodiments are merely some embodiments of the present application, instead of all embodiments. All other embodiments, which can be obtained by a person skilled in the art without making any creative effort based on the embodiments in the present application, fall within the protection scope of the present application.

The terms "first", "second" are used for descriptive purposes only and are not to be construed as indicating or implying relative importance or to implicitly indicate the number of technical features indicated. Thus, a feature defined with "first" or "second" may explicitly or implicitly include one or more of that feature. In the description of the present application, "a plurality" means two or more unless otherwise specified.

In the description of the present application, it should be noted that unless otherwise explicitly stated or limited, the term "connected" is to be interpreted broadly, e.g., as directly connected or indirectly connected through an intermediate medium, or as a communication between two devices. For those of ordinary skill in the art, the specific meaning of the above term in the present application can be understood according to specific situations.

CSI-RS is a reference signal in downlink in the 5G network, mainly for downlink channel detection and channel measurement.

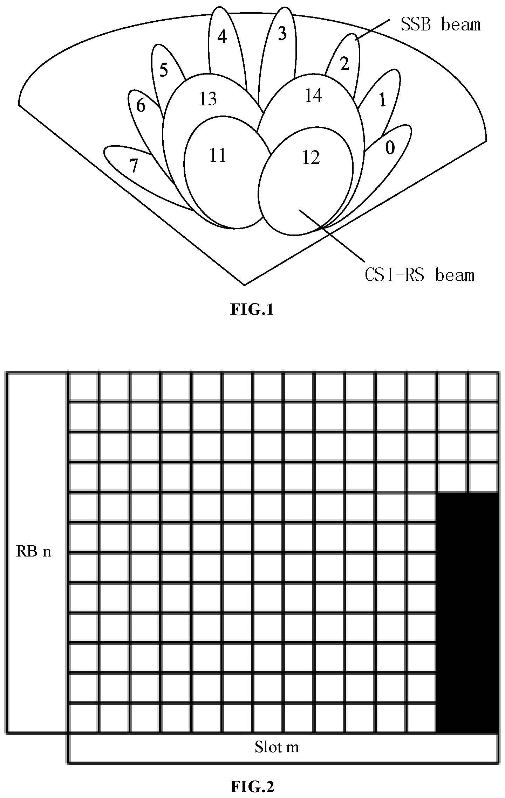

For a ground base station, its network coverage radius is typically several hundred meters. In order to save downlink time-frequency resources, the CSI-RS is designed to be a cell-level beam wider than the SSB, and a certain number of CSI-RS beams can cover the whole cell. Referring to FIG. 1, narrow beams are SSB beams (beams 0-7) and fan beams are CSI-RS beams (beams 11-14), and the whole cell is covered by 4 CSI-RS beams.

For a satellite base station, since satellite communication is limited by a large coverage range and transmitting power of satellite phased array, it is difficult to implement a wide beam which covers a plurality of beam footprints using a single channel. In the related art, all beam footprints in a cell are covered by means of periodic scanning.

However, in the above scheme, each beam footprint needs to be configured with a set of time-frequency resources, that is, as many beam footprints as there are, as many sets of CSI-RS time-frequency resources are needed, so that the CSI-RS configurations are unreasonable, possibly resulting in waste of time-frequency resources.

Referring to FIG. 2, in some embodiments, the CSI-RS adopts a UE-level configuration, and each UE uses different Resource Elements (REs) in a Resource Block (RB) -n, that is, each square corresponds to one UE. When there are multiple users in the same beam, different UEs use different resources, and in order to save resources, an aperiodic configuration is generally used, which must be activated by a Media Access Control (MAC) Control Element (CE) when in use.

However, when the number of users/load is higher, more time-frequency resources still need to be occupied. Different UEs occupy different resources and have different activation times, and the base station side must maintain a CSI-RS sending and reporting mechanism for each UE. This manner is limited by scheduling granularity, except space division Multiple Input Multiple Output (MIMO), only UEs at the same beam footprint can be scheduled within a minimum scheduling granularity, so that the scheme cannot take into account multiple beam footprints; and when the service load is heavy, downlink control signaling (L2 signaling) in the Medium Access Control (MAC) layer is increases significantly.

In view of this, an embodiment of the present application provides a CSI-RS configuration method and apparatus, a satellite base station, and a UE, where the CSI-RS configuration method is applied to the satellite base station, and includes: determining activated numbers of UEs and service loads at a plurality of beam footprints of the satellite base station, in a target detection period; determining CSI-RS configuration modes corresponding to the plurality of beam footprints based on the activated numbers of UEs and the service loads at the plurality of beam footprints, where the CSI-RS configuration modes include a periodic CSI-RS configuration and a configuration of CSI-RS transmitted accompanying service transmission; and determining a CSI-RS configuration mode of the satellite base station according to the CSI-RS configuration modes corresponding to the plurality of beam footprints of the satellite base station.

In the above solution, by using dynamic CSI-RS configuration, the CSI-RS configuration modes suitable for the plurality of beam footprints are determined according to the activated numbers of UEs and the service loads in the target detection period, and then the CSI-RS configuration modes corresponding to the plurality of beam footprints of the satellite base station are integrated to determine the CSI-RS configuration mode suitable for the satellite base station more reasonably, and flexible switching is performed between the periodic CSI-RS configuration and the configuration of CSI-RS transmitted accompanying service transmission, reducing the waste of resources when the load is light and the occurrence of an increase in resources when the load is heavy.

The following describes the technical solution of the present application and how to solve the above technical problem in detail with reference to the accompanying drawings and specific embodiments. These several specific embodiments may be combined with each other below, and details of the same or similar concepts or processes may not be repeated in some embodiments.

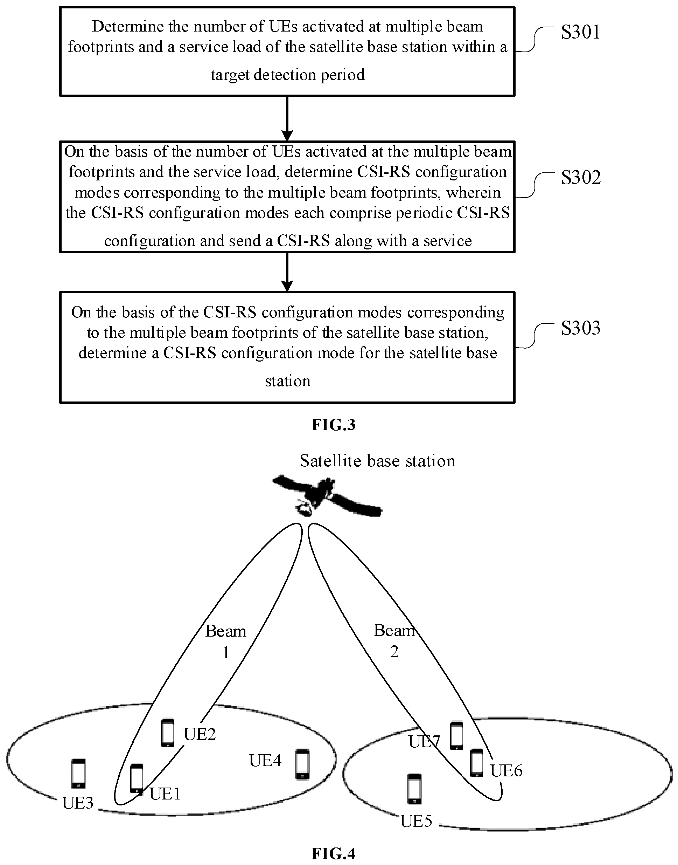

FIG. 3 is a schematic flow diagram of a first CSI-RS configuration method according to an embodiment of the present application, as shown in FIG. 3, including the following steps: S301~ S303.

In step S301: activated numbers of UEs and service loads at a plurality of beam footprints of the satellite base station are determined, in a target detection period.

In this embodiment, dynamic CSI-RS configuration is adopted. Since the number of users and loads affect resource occupancy, the activated numbers of UEs and the service loads at the plurality of beam footprints of the satellite base station are determined for the target detection period, and CSI-RS configuration modes corresponding to the plurality of beam footprints are further determined.

In this embodiment, a detection period is not specifically limited. For example, every preset time period is taken as a detection period, and a current detection period is taken as the target detection period.

Illustratively, an activated number of UEs at a beam footprint is an average activated number of UEs at the beam footprint in the target detection period; a service load at the beam footprint is an average Resource Block (RB) usage rate at that beam footprint in the target detection period.

The plurality of beam footprints of the satellite base station may be part or all of the beam footprints corresponding to the satellite base station, which is not specifically limited in this embodiment.

In step S302: CSI-RS configuration modes corresponding to the plurality of beam footprints are determined based on the activated numbers of UEs and the service loads at the plurality of beam footprints.

The CSI-RS configuration modes include a periodic CSI-RS configuration and a configuration of CSI-RS transmitted accompanying service transmission.

As described above, the number of users and loads affect resource occupancy. Based on this, whether more signaling resources and time-frequency resources are required at the plurality of beam footprints can be learned according to the activated numbers of UEs and the service loads at the plurality of beam footprints, thereby determining the CSI-RS configuration modes suitable for the plurality of beam footprints.

In the embodiment, switching is performed between the periodic CSI-RS configuration and the configuration of CSI-RS transmitted accompanying service transmission. For the configuration of CSI-RS transmitted accompanying service transmission, the CSI-RS is transmitted accompanying a Physical Downlink Shared Channel (PDSCH) carrying downlink service. When there is the downlink service, the CSI-RS is transmitted while scheduling the downlink service. UEs in one beam adopt the same time-frequency resource, and when a space division isolation between a plurality of service beams meets a requirement, the plurality of service beams transmitted simultaneously also adopt the same time-frequency resource.

Referring to FIG. 4, assuming that at a certain scheduling moment, the satellite base station simultaneously transmits beam 1 and beam 2, the beam 1 and beam 2 use the same time-frequency resource. CSI-RS are sent to UE1, UE2 (corresponding to the beam 1) inside the coverage of beam 1, and UE6, UE7 (corresponding to the beam 2) inside the coverage of beam 1, but UE3, UE4, and UE5 outside the coverage of the two service beams will not receive CSI-RS, and need to wait until other service beams covering these UEs send CSI-RS. For simple implementation, one RE is configured for sending CSI-RS for each scheduled service RB.

FIG. 4 is only an example, and more or fewer beams may be used to cover more or fewer UEs in the implementation.

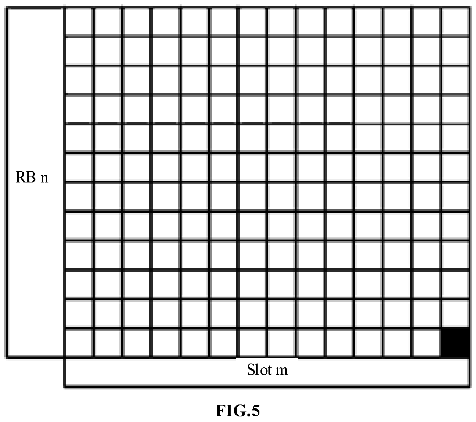

Referring to FIG. 5, when a UE accesses, the UE is notified of a frequency resource through RRC reconfiguration. The frequency domain may be any RE in a last column of symbols, but in order to not overlap with a Channel State Information Reference Signal (CSI-IM) and not block transmission of a PDSCH, the frequency domain may be configured as a last RE in the last symbol (a black square shown in FIG. 5).

In step S303: A CSI-RS configuration mode of the satellite base station is determined according to the CSI-RS configuration modes corresponding to the plurality of beam footprints of the satellite base station.

In implementation, the satellite base station has a plurality of beam footprints, and the CSI-RS configuration modes suitable for different beam footprints may be the same or different, so that the CSI-RS configuration mode suitable for the satellite base station is more reasonably determined by integrating the CSI-RS configuration modes corresponding to the plurality of beam footprints of the satellite base station.

In the above solution, by using dynamic CSI-RS configuration, the CSI-RS configuration modes suitable for the plurality of beam footprints are determined according to the activated numbers of UEs and the service loads in the target detection period, and then the CSI-RS configuration modes corresponding to the plurality of beam footprints of the satellite base station are integrated to determine the CSI-RS configuration mode suitable for the satellite base station more reasonably, and flexible switching is performed between the periodic CSI-RS configuration and the configuration of CSI-RS transmitted accompanying service transmission, reducing the waste of resources when the load is light and the occurrence of an increase in resources when the load is heavy.

In one or more embodiments, the step S302 can be implemented by, but not limited to: in a case where an activated number of UEs at a first beam footprint is greater than a preset number, and/or a service load at the first beam footprint is greater than a preset load, determining that a CSI-RS configuration mode corresponding to the first beam footprint is the periodic CSI-RS configuration; or, in a case where the activated number of UEs at the first beam footprint is not greater than the preset number and the service load at the first beam footprint is not greater than the preset load, determining that the CSI-RS configuration mode corresponding to the first beam footprint is the configuration of CSI-RS transmitted accompanying service transmission.

The first beam footprint is any one of the plurality of beam footprints.

As described above, the number of users and the load affect resource occupation. Based on this, the preset number and the preset load are set in this embodiment, and an activated number of UEs at a beam footprint is compared with the preset number, and a service load at the beam footprint is compared with the preset load.

In a case where the activated number of UEs at the beam footprint is greater than the preset number, this shows that the number of users at the beam footprint is larger, more signaling resources are required for notifying sending CSI-RS through RRC reconfiguration and DCI, and thus the beam footprint is more suitable for the periodic CSI-RS configuration. In a case where the service load at the beam footprint is greater than the preset load, it shows that the service load requires more RBs, each RB is configured with one RE to transmit CSI-RS in this scenario, resulting in the waste of time-frequency resources, and thus the beam footprint is more suitable for the periodic CSI-RS configuration. Otherwise, the beam footprint does not require more signaling resources and has lighter load, and thus the beam footprint is more suitable for the configuration of CSI-RS transmitted accompanying service transmission.

Therefore, as long as at least one of the following is met: the activated number of the UEs at the beam footprint being greater than the preset number, or the service load at the beam footprint being greater than the preset load, it is determined that the CSI-RS configuration mode corresponding to the beam footprint is the periodic CSI-RS configuration; and as longs as both are not met, it is determined that the CSI-RS configuration mode corresponding to the beam footprint is the configuration of CSI-RS transmitted accompanying service transmission.

In the above solution, by comparing the activated numbers of UEs at the beam footprints with the preset number, and comparing the service loads at the beam footprints with the preset load, and combining requirements for signaling resources of UEs and the load conditions at the beam footprints, the CSI-RS configuration modes suitable for a plurality of beam footprints are accurately and reasonably selected.

In one or more embodiments, the step S303 can be implemented by, but is not limited to: determining, for the satellite base station, a beam footprint proportion of beam footprints corresponding to a periodic CSI-RS configuration to a plurality of beam footprints; in a case where the beam footprint proportion is greater than a preset proportion, determining that the CSI-RS configuration mode of the satellite base station is the periodic CSI-RS configuration; or in a case where the beam footprint proportion is not greater than the preset proportion, determining that the CSI-RS configuration mode of the satellite base station is the configuration of CSI-RS transmitted accompanying service transmission.

As described above, the satellite base station has the plurality of beam footprints, and CSI-RS configuration modes suitable for different beam footprints may be the same or different, and it is necessary to integrate the CSI-RS configuration modes corresponding to the plurality of beam footprints of the satellite base station. Based on this, the preset proportion is set in this embodiment, and by comparing the beam footprint proportion of the beam footprints corresponding to the periodic CSI-RS configuration to the plurality of beam footprints with the preset proportion, if the beam footprint proportion is greater than the preset proportion, it shows that there are more beam footprints suitable for the periodic CSI-RS configuration, and in order to meet requirements of these beam footprints, the satellite base station is more suitable for the periodic CSI-RS configuration; on the contrary, if the beam footprint proportion is not greater than the preset proportion, there are more beam footprints suitable for a configuration of CSI-RS transmitted accompanying service transmission, and in order to meet requirements of these beam footprints, the satellite base station is more suitable for the configuration of CSI-RS transmitted accompanying service transmission.

The preset proportion is not specifically limited in this embodiment, and may be set according to an actual application scenario, for example, the present proportion may be set by integrating a total number of beam footprints, locations, and other factors.

In the above solution, by setting the preset proportion, and comparing the beam footprint proportion of the beam footprints corresponding to the periodic CSI-RS configuration to the plurality of beam footprints with the preset proportion, the CSI-RS configuration mode suitable for most of the beam footprints is selected.

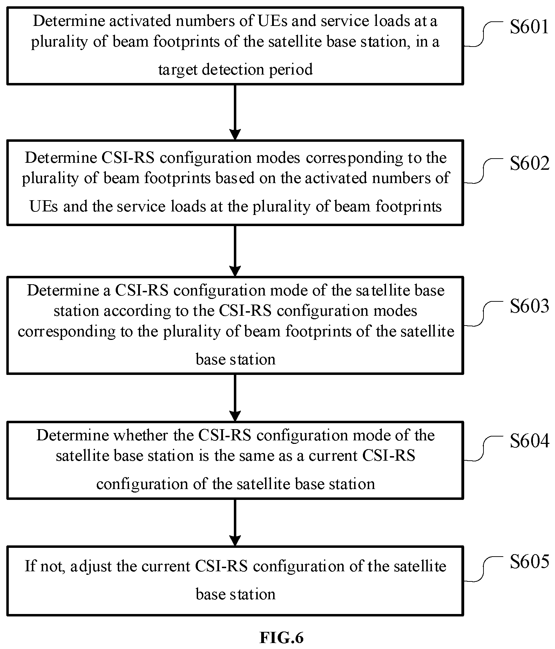

FIG. 6 is a schematic flow diagram of a second CSI-RS configuration method according to an embodiment of the present application, as shown in FIG. 6, including the following steps: S601~S605.

In step S601: activated numbers of UEs and service loads at a plurality of beam footprints of the satellite base station are determined, in a target detection period; in step S602: CSI-RS configuration modes corresponding to the plurality of beam footprints are determined based on the activated numbers of UEs and the service loads at the plurality of beam footprints, where, the CSI-RS configuration modes include a periodic CSI-RS configuration and a configuration of CSI-RS transmitted accompanying service transmission; in step S603: a CSI-RS configuration mode of the satellite base station is determined according to the CSI-RS configuration modes corresponding to the plurality of beam footprints of the satellite base station.

The specific implementation of the steps S601 to S603 may refer to the above embodiments, and will not be described herein again.

In step S604: it is determined whether the CSI-RS configuration mode of the satellite base station is the same as a current CSI-RS configuration of the satellite base station.

In implementation, the CSI-RS configuration mode of the satellite base station may be the same as or different from the current CSI-RS configuration of the satellite base station, and if the CSI-RS configuration mode is the same as the current CSI-RS configuration, the current CSI-RS configuration is maintained; if the CSI-RS configuration mode is different from the current CSI-RS configuration, the current CSI-RS configuration of the satellite base station needs to be adjusted, i.e., step S605 is executed.

In step S605: if not, the current CSI-RS configuration of the satellite base station is adjusted.

Illustratively, in a case where the CSI-RS configuration mode determined by the satellite base station is different from the current CSI-RS configuration, the current CSI-RS configuration of the satellite base station needs to be adjusted, and the current CSI-RS configuration of the satellite base station is adjusted to the CSI-RS configuration mode.

In one or more embodiments, in a case where the CSI-RS configuration mode of the satellite base station is the periodic CSI-RS configuration, the CSI-RS configuration modes of the plurality of beam footprints of the satellite base station are adjusted to the periodic CSI-RS configuration, after a first time period; and in a case where the CSI-RS configuration mode of the satellite base station is the configuration of CSI-RS transmitted accompanying service transmission, the CSI-RS configuration modes of the plurality of beam footprints of the satellite base station are adjusted to the configuration of CSI-RS transmitted accompanying service transmission, after a second time period.

In implementation, a ping-pong switching may occur between different CSI-RS configuration modes, and based on this, the embodiment sets a hysteresis time - the first time period, such as m slots, and the second time period, such as n slots. If the CSI-RS configuration mode of the satellite base station is the periodic CSI-RS configuration, after waiting for the first time period, the CSI-RS configuration modes of the plurality of beam footprints of the satellite base station are adjusted to the periodic CSI-RS configuration; and if the CSI-RS configuration mode of the satellite base station is that the configuration of CSI-RS transmitted accompanying service transmission, after waiting for the second time period, the CSI-RS configuration modes of the plurality of beam footprints of the satellite base station are adjusted to the configuration of CSI-RS transmitted accompanying service transmission.

The embodiment does not specifically limit the hysteresis time, and the first time period and the second time period may be the same or different.

In the above solution, by waiting for the hysteresis time, the ping-pong switching between the periodical CSI-RS configuration and the configuration of CSI-RS transmitted accompanying service transmission is reduced.

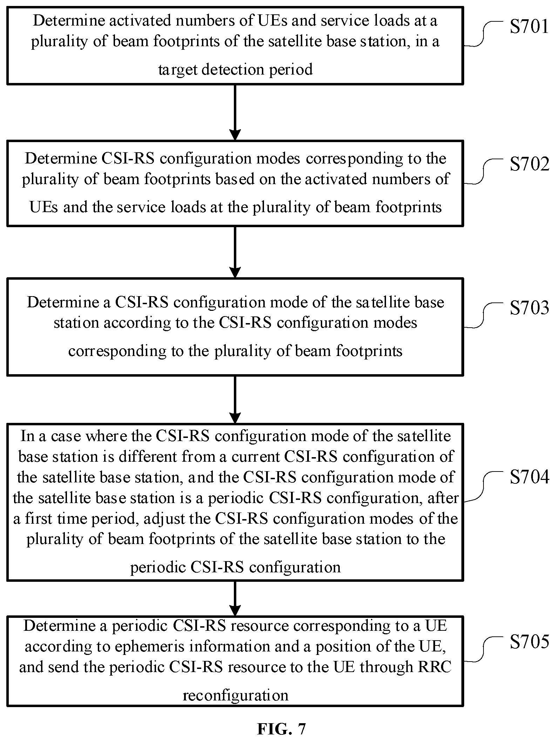

FIG. 7 is a schematic flow diagram of a third CSI-RS configuration method according to an embodiment of the present application, as shown in FIG. 7, including the following steps: S701~S705. In step S701: activated numbers of UEs and service loads at a plurality of beam footprints of the satellite base station are determined, in a target detection period; in step S702: CSI-RS configuration modes corresponding to the plurality of beam footprints are determined based on the activated numbers of UEs and the service loads at the plurality of beam footprints, where, the CSI-RS configuration modes include a periodic CSI-RS configuration and a configuration of CSI-RS transmitted accompanying service transmission; in step S703: A CSI-RS configuration mode of the satellite base station is determined according to the CSI-RS configuration modes corresponding to the plurality of beam footprints of the satellite base station; in step S704: in a case where the CSI-RS configuration mode of the satellite base station is different from a current CSI-RS configuration of the satellite base station, and the CSI-RS configuration mode of the satellite base station is the periodic CSI-RS configuration, the CSI-RS configuration modes of the plurality of beam footprints of the satellite base station are adjusted to the periodic CSI-RS configuration, after a first time period.

The specific implementation of the steps S701 to S704 can refer to the above embodiment, and will not be described herein again.

In step S705: Periodic CSI-RS resources corresponding to a UE is determined according to ephemeris information and a position of the UE, and the periodic CSI-RS resources is sent to the UE through Radio Resource Control (RRC) reconfiguration.

In the periodic CSI-RS configuration, in order to avoid the problem of frequent reconfiguration of a resource set due to high-speed movement of a satellite station, the satellite base station will predict possible future resources by referring to the position of UE and ephemeris information, namely, a cell-level periodic resource set is selected for the UE according to the ephemeris information and the position of the UE, and it is notified to the UE through RRC reconfiguration.

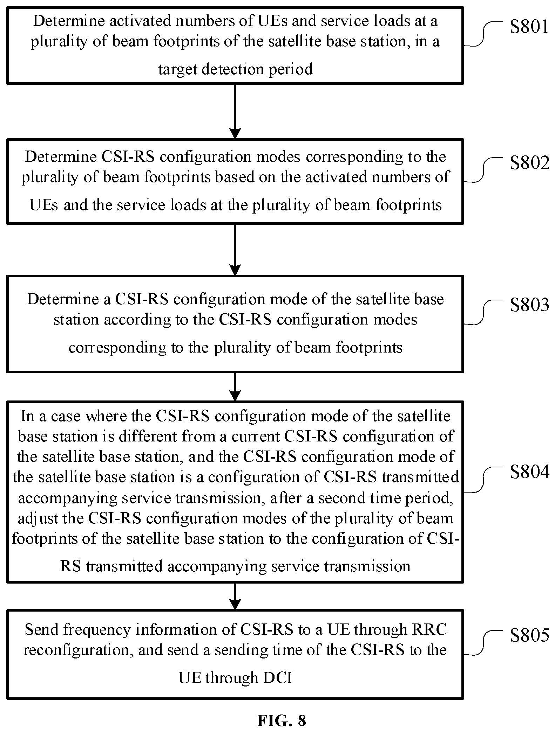

FIG. 8 is a schematic flow diagram of a fourth CSI-RS configuration method according to an embodiment of the present application, as shown in FIG. 8, including the following steps: S801~S805.

In step S801: activated numbers of UEs and service loads at a plurality of beam footprints of the satellite base station are determined, in a target detection period; in step S802: CSI-RS configuration modes corresponding to the plurality of beam footprints are determined based on the activated numbers of UEs and the service loads at the plurality of beam footprints, where, the CSI-RS configuration modes include a periodic CSI-RS configuration and a configuration of CSI-RS transmitted accompanying service transmission; in step S803: A CSI-RS configuration mode of the satellite base station is determined according to the CSI-RS configuration modes corresponding to the plurality of beam footprints of the satellite base station; in step S804: in a case where the CSI-RS configuration mode of the satellite base station is different from a current CSI-RS configuration of the satellite base station, and the CSI-RS configuration mode of the satellite base station is the configuration of CSI-RS transmitted accompanying service transmission, the CSI-RS configuration modes of the plurality of beam footprints of the satellite base station are adjusted to the configuration of CSI-RS transmitted accompanying service transmission, after a second time period.

The specific implementation of the steps S801 to S804 can refer to the above embodiment, and will not be described herein again.

In step S805: frequency information of CSI-Rs is sent to a UE through RRC reconfiguration, and a sending time of the CSI-RS is sent to the UE through Downlink Control Information (DCI).

In implementation, the UE is notified of the frequency information through RRC reconfiguration; and time domain corresponds to a slot where PDSCH allocated by the UE is located, and it is notified to the UE through DCI.

In one or more embodiments, the following steps are further performed: before the determining activated numbers of UEs and service loads at a plurality of beam footprints of the satellite base station, in a target detection period, determining whether historical configuration information exists, in response to the satellite base station is turned on; in a case where the historical configuration information exists and a current time is in a historical detection period in the historical configuration information, configuring the satellite base station to a CSI-RS configuration mode corresponding to the historical configuration information; or in a case where the historical configuration information does not exist, or the current time is not in the historical detection period in the historical configuration information, configuring the satellite base station to a preset CSI-RS configuration mode.

In implementation, the historical configuration information can be established based on CSI-RS historical configuration, including a historical configuration mode and an effective time (corresponding detection period) of CSI-RS; and if the current time is within the effective time, the satellite base station sends and allocates resources according to the CSI-RS configuration mode in the historical configuration information.

Referring to Table 1, if the historical configuration mode saved in a historical configuration information table of the base station CSI-RS is the periodic CSI-RS configuration and the current time is still within time period T1, the satellite base station still adopts the periodic CSI-RS configuration after being turned on.

**Table 1 CSI-RS History configuration information**

| CSI-RS configuration mode | Effective time |
|---|---|
| Periodic CSI-RS configuration | T1 |

The above preset CSI-RS configuration mode is not specifically limited in this embodiment, and may be set according to an actual application scenario.

On the basis of any of the above embodiments, after the satellite base station determines the CSI-RS configuration mode, a UE reports Channel Quality Indicator (CQI) to the satellite base station according to the CSI-RS configuration mode.

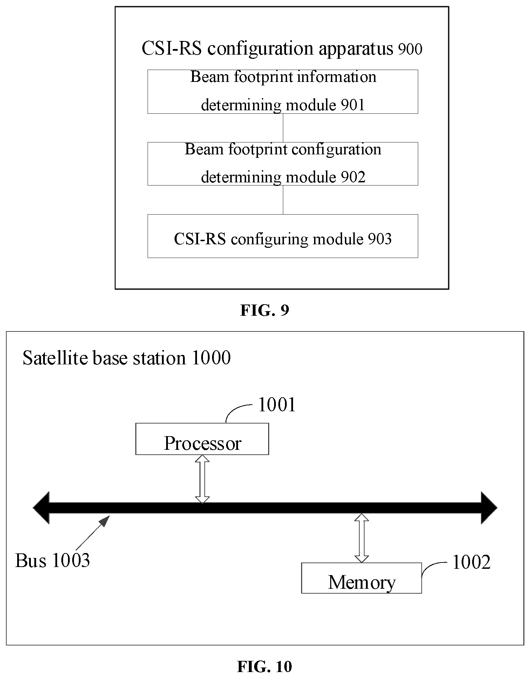

As shown in FIG. 9, an embodiment of the present application provides a CSI-RS configuration apparatus 900, applied to a satellite base station, including: a beam footprint information determining module 901 configured to, determine activated numbers of User Equipments (UEs) and service loads at a plurality of beam footprints of the satellite base station, in a target detection period; a beam footprint configuration determining module 902 configured to, determine CSI-RS configuration modes corresponding to the plurality of beam footprints based on the activated numbers of UEs and the service loads at the plurality of beam footprints, where the CSI-RS configuration modes include a periodic CSI-RS configuration and a configuration of CSI-RS transmitted accompanying service transmission; and a CSI-RS configuring module 903 configured to, determine a CSI-RS configuration mode of the satellite base station according to the CSI-RS configuration modes corresponding to the plurality of beam footprints of the satellite base station.

In one or more embodiments, the beam footprint configuration determining module 902 is specifically configured to: in a case where an activated number of UEs at a first beam footprint is greater than a preset number, and/or a service load at the first beam footprint is greater than a preset load, determine that a CSI-RS configuration mode corresponding to the first beam footprint is the periodic CSI-RS configuration; or, in a case where the activated number of UEs at the first beam footprint is not greater than the preset number and the service load at the first beam footprint is not greater than the preset load, determine that the CSI-RS configuration mode corresponding to the first beam footprint is the configuration of CSI-RS transmitted accompanying service transmission.

In one or more embodiments, the CSI-RS configuring module 903 is specifically configured to: determine, for the satellite base station, a beam footprint proportion of beam footprints corresponding to the periodic CSI-RS configuration to the plurality of beam footprints; in a case where the beam footprint proportion is greater than a preset proportion, determine that the CSI-RS configuration mode of the satellite base station is the periodic CSI-RS configuration; or in a case where the beam footprint proportion is not greater than the preset proportion, determine that the CSI-RS configuration mode of the satellite base station is the configuration of CSI-RS transmitted accompanying service transmission.

In one or more embodiments, the CSI-RS configuring module 903 is further configured to: after determining the CSI-RS configuration mode of the satellite base station, determine whether the CSI-RS configuration mode of the satellite base station is the same as a current CSI-RS configuration of the satellite base station; and if not, adjust the current CSI-RS configuration of the satellite base station.

In one or more embodiments, the CSI-RS configuring module 903 is specifically configured to: in a case where the CSI-RS configuration mode of the satellite base station is the periodic CSI-RS configuration, adjust the CSI-RS configuration modes of the plurality of beam footprints of the satellite base station to the periodic CSI-RS configuration, after a first time period; or in a case where the CSI-RS configuration mode of the satellite base station is the configuration of CSI-RS transmitted accompanying service transmission, adjust the CSI-RS configuration modes of the plurality of beam footprints of the satellite base station to the configuration of CSI-RS transmitted accompanying service transmission, after a second time period.

In one or more embodiments, the CSI-RS configuring module 903 is further configured to: determine periodic CSI-RS resources corresponding to a UE according to ephemeris information and a position of the UE, and send the periodic CSI-RS resources to the UE through Radio Resource Control (RRC) reconfiguration; the CSI-RS configuring module 903 is further configured to: send frequency information of CSI-RS to a UE through Radio Resource Control (RRC) reconfiguration, and send a sending time of the CSI-RS to the UE through Downlink Control Information (DCI).

In one or more embodiments, the CSI-RS configuring module 903 is further configured to: before the beam footprint information determining module 901 determining activated numbers of UEs and service loads at a plurality of beam footprints of the satellite base station, in a target detection period, determine whether historical configuration information exists, in response to the satellite base station is turned on; in a case where the historical configuration information exists, and a current time is in a historical detection period in the historical configuration information, configure the satellite base station to a CSI-RS configuration mode corresponding to the historical configuration information; or in a case where the historical configuration information does not exist, or the current time is not in the historical detection period in the historical configuration information, configure the satellite base station to a preset CSI-RS configuration mode.

Since the apparatus is an apparatus in the CSI-RS configuration method executed by the satellite base station in the embodiment of the present application, and the principle of the apparatus for solving problem is similar to that of the CSI-RS configuration method, the implementation of the apparatus may refer to the implementation of the CSI-RS configuration method, and repeated descriptions are omitted.

The embodiment of the present application provides a CSI-RS configuration apparatus, applied to a UE, including: a reporting module configured to, report a Channel Quality Indicator (CQI) to a satellite base station based on a CSI-RS configuration mode of the satellite base station; where the satellite base station determines the CSI-RS configuration mode by: determining activated numbers of User Equipments (UEs) and service loads at a plurality of beam footprints of the satellite base station, in a target detection period; determining CSI-RS configuration modes corresponding to the plurality of beam footprints based on the activated numbers of UEs and the service loads at the plurality of beam footprints, where the CSI-RS configuration modes include a periodic CSI-RS configuration and a configuration of CSI-RS transmitted accompanying service transmission; and determining the CSI-RS configuration mode of the satellite base station according to the CSI-RS configuration modes corresponding to the plurality of beam footprints of the satellite base station.

In one or more embodiments, the apparatus further includes a receiving module configured to: in a case where the CSI-RS configuration mode is the periodic CSI-RS configuration, before the reporting module reporting the CQI to the satellite base station, receive periodic CSI-RS resources sent by the satellite base station through Radio Resource Control (RRC) reconfiguration; where the periodic CSI-RS resources is determined by the satellite base station according to ephemeris information and a position of the UE.

In one or more embodiments, the apparatus further includes a receiving module configured to: in a case where the CSI-RS configuration mode is the configuration of CSI-RS transmitted accompanying service transmission, before the reporting module reporting the CQI to the satellite base station, receive frequency information of CSI-RS sent by the satellite base station through Radio Resource Control (RRC) reconfiguration; and receive a sending time of the CSI-RS sent by the satellite base station through Downlink Control Information (DCI).

Since the apparatus is an apparatus in the CSI-RS configuration method executed by the UE in the embodiment of the present application, and the principle of the apparatus for solving the problem is similar to that of the CSI-RS configuration method, the implementation of the apparatus may refer to the implementation of the CSI-RS configuration method, and repeated details are not described herein.

Based on same technical concept, an embodiment of the present application further provides a satellite base station 1000, as shown in FIG. 10, including at least one processor 1001 and a memory 1002 connected to the at least one processor. A specific connection medium between the processor 1001 and the memory 1002 is not limited in the embodiment of the present application, and the processor 1001 and the memory 1002 in FIG. 10 are connected through a bus 1003 as an example. The bus may be divided into an address bus, a data bus, a control bus, etc. For ease of illustration, only one thick line is shown in FIG. 10, but that does not indicate only one bus or one type of bus.

The processor 1001 is a control center of the satellite base station, and may connect various parts of the satellite base station by using various interfaces and lines, and perform or execute instructions stored in the memory 1002 and call up data stored in the memory 1002, thereby implementing data processing. Optionally, the processor 1001 may include one or more processing units, and the processor 1001 may integrate an application processor and a modem processor, where the application processor mainly processes an operating system, a user interface, an application program, and the like, and the modem processor mainly processes an issued instruction. It will be appreciated that the modem processor may not be integrated into the processor 1001. In some embodiments, the processor 1001 and the memory 1002 may be implemented on same chip, or in some embodiments, they may be implemented separately on separate chips.

The processor 1001 may be a general-purpose processor, such as a Central Processing Unit (CPU), digital signal processor, Application Specific Integrated Circuit (ASIC), field programmable gate array or other programmable logic device, discrete gate or transistor logic, discrete hardware components, or the like, and may implement or perform the methods, steps, and logic blocks disclosed in the embodiments of the present application. The general-purpose processor may be a microprocessor or any conventional processor or the like. The steps of the method disclosed in connection with the CSI-RS configuration method embodiment may be directly implemented by a hardware processor, or implemented by a combination of hardware and software modules in the processor.

The memory 1002, which is a non-volatile computer-readable storage medium, may be used to store non-volatile software programs, non-volatile computer-executable programs, and modules. The memory 1002 may include at least one type of storage medium, which may include, for example, a flash memory, a hard disk, a multimedia card, a card-type memory, a Random Access Memory (RAM), a Static Random Access Memory (SRAM), a Programmable Read Only Memory (PROM), a Read Only Memory (ROM), an Electrically Erasable Programmable Read-Only Memory (EEPROM), a magnetic memory, a magnetic disk, an optical disk, and the like. The memory 1002 is any other medium that can be used to carry or store desired program code in the form of instructions or data structures and that can be accessed by a computer, but is not limited to such. The memory 1002 in the embodiments of the present application may also be circuitry or any other apparatus capable of performing a storage function, to store program instructions and/or data.

In the embodiment of the present application, the memory 1002 stores a computer program which, when executed by the processor 1001, causes the processor 1001 to: determine activated numbers of UEs and service loads at a plurality of beam footprints of the satellite base station, in a target detection period; determine CSI-RS configuration modes corresponding to the plurality of beam footprints based on the activated numbers of UEs and the service loads at the plurality of beam footprints, where the CSI-RS configuration modes include a periodic CSI-RS configuration and a configuration of CSI-RS transmitted accompanying service transmission; and determine a CSI-RS configuration mode of the satellite base station according to the CSI-RS configuration modes corresponding to the plurality of beam footprints of the satellite base station.

In one or more embodiments, the processor 1001 is specifically configured to: in a case where an activated number of UEs at a first beam footprint is greater than a preset number, and/or a service load at the first beam footprint is greater than a preset load, determine that a CSI-RS configuration mode corresponding to the first beam footprint is the periodic CSI-RS configuration; or, in a case where the activated number of UEs at the first beam footprint is not greater than the preset number and the service load at the first beam footprint is not greater than the preset load, determine that the CSI-RS configuration mode corresponding to the first beam footprint is the configuration of CSI-RS transmitted accompanying service transmission.

In one or more embodiments, the processor 1001 is specifically configured to: determine, for the satellite base station, a beam footprint proportion of beam footprints corresponding to the periodic CSI-RS configuration to the plurality of beam footprints; in a case where the beam footprint proportion is greater than a preset proportion, determine that the CSI-RS configuration mode of the satellite base station is the periodic CSI-RS configuration; or in a case where the beam footprint proportion is not greater than the preset proportion, determine that the CSI-RS configuration mode of the satellite base station is the configuration of CSI-RS transmitted accompanying service transmission.

In one or more embodiments, the processor 1001 is further specifically configured to: after determining the CSI-RS configuration mode of the satellite base station, determine whether the CSI-RS configuration mode of the satellite base station is the same as a current CSI-RS configuration of the satellite base station; and if not, adjust the current CSI-RS configuration of the satellite base station.

In one or more embodiments, the processor 1001 is specifically configured to: in a case where the CSI-RS configuration mode of the satellite base station is the periodic CSI-RS configuration, adjust the CSI-RS configuration modes of the plurality of beam footprints of the satellite base station to the periodic CSI-RS configuration, after a first time period; or in a case where the CSI-RS configuration mode of the satellite base station is the configuration of CSI-RS transmitted accompanying service transmission, adjust the CSI-RS configuration modes of the plurality of beam footprints of the satellite base station to the configuration of CSI-RS transmitted accompanying service transmission, after a second time period.

In one or more embodiments, the CSI-RS configuration modes of the plurality of beam footprints of the satellite base station are adjusted to the periodic CSI-RS configuration, the processor 1001 is further specifically configured to: determine periodic CSI-RS resources corresponding to a UE according to ephemeris information and a position of the UE; and send the periodic CSI-RS resources to the UE through Radio Resource Control (RRC) reconfiguration; the CSI-RS configuration modes of the plurality of beam footprints of the satellite base station are adjusted to the configuration of CSI-RS transmitted accompanying service transmission, the processor 1001 is further specifically configured to: send frequency information of CSI-RS to a UE through Radio Resource Control (RRC) reconfiguration, and send a sending time of the CSI-RS to the UE through Downlink Control Information (DCI).

In one or more embodiments, the processor 1001 is further specifically configured to: before the determining activated numbers of User Equipments (UEs) and service loads at a plurality of beam footprints of the satellite base station, in a target detection period, determine whether historical configuration information exists, in response to the satellite base station is turned on; in a case where the historical configuration information exists and a current time is in a historical detection period in the historical configuration information, configure the satellite base station to a CSI-RS configuration mode corresponding to the historical configuration information; or in a case where the historical configuration information does not exist, or the current time is not in the historical detection period in the historical configuration information, configure the satellite base station to a preset CSI-RS configuration mode.

Since the satellite base station is the satellite base station in the CSI-RS configuration method in the embodiment of the present application, and principle of the satellite base station for solving problem is similar to that of the CSI-RS configuration method, the implementation of the satellite base station may refer to the implementation of the CSI-RS configuration method, and repeated descriptions are omitted.

Based on same technical concept, the embodiments of the present application provide a UE, including at least one processor and at least one memory, where the memory stores a computer program which, when executed by the processor, causes the processor to perform the CSI-RS configuration method corresponding to the UE.

Based on the same technical concept, the embodiments of the present application also provide a computer-readable storage medium having store thereon a computer program executable by a processor, which, when running on the processor, causes the processor to perform the steps of the above CSI-RS configuration method.

In some alternative embodiments, various aspects of the CSI-RS configuration method provided by the present application may also be implemented in the form of a program product containing computer-executable instructions, which, when running on a computer device, causes the computer device to perform the steps of the CSI-RS configuration method according to various exemplary embodiments of the present application described above in this specification.

As will be appreciated by one skilled in the art, the embodiments of the present application may be provided as a method, system, or computer program product. Accordingly, the present application may take the form of an entirely hardware embodiment, an entirely software embodiment or an embodiment combining software and hardware aspects. Furthermore, the present application may take the form of a computer program product embodied on one or more computer-usable storage media (including, but not limited to, a disk storage, a CD-ROM, a optical storage, and the like) having computer-usable program code embodied therein.

The present application is described with reference to flow and/or block diagrams of methods, apparatuses (systems), and computer program products according to the application. It will be understood that each flow and/or block of the flow and/or block diagrams, and combinations of flows and/or blocks in the flow and/or block diagrams, can be implemented by computer program instructions. These computer program instructions may be provided to a processor of a general purpose computer, special purpose computer, embedded processor, or other programmable data processing apparatus to produce a machine, such that the instructions, which executed by the processor of the computer or other programmable data processing apparatus, create means for implementing the functions specified in one or more flows of the flow diagram and/or one or more blocks in the block diagram.

These computer program instructions may also be stored in a computer-readable memory that can direct a computer or other programmable data processing apparatus to function in a particular manner, such that the instructions stored in the computer-readable memory produce an article of manufacture including instruction means which implement the functions specified in one or more flows of the flow diagram and/or one or more blocks in the block diagram.

These computer program instructions may also be loaded onto a computer or other programmable data processing apparatus to cause a series of operational steps to be performed on the computer or other programmable apparatus to produce a computer implemented process, such that the instructions, when executed on the computer or other programmable apparatus, provide steps for implementing the functions specified in one or more flows of the flow diagram and/or one or more blocks in the block diagram.

While preferred embodiments of the present application have been described, those skilled in the art may made additional variations and modifications to those embodiments once they learn the basic inventive concepts. Therefore, it is intended that the appended claims be interpreted as including the preferred embodiments and all variations and modifications that fall within the scope of the application.

It will be apparent to those skilled in the art that various variations and modifications may be made to the present application without departing from the spirit and scope of the application. Thus, if such modifications and variations to the present application fall within the scope of the claims of the present application and their equivalents, the present application is also intended to include such modifications and variations.

## Claims

1. A Channel State Information Reference Signal (CSI-RS) configuration method, **characterized by** applied to a satellite base station, comprising:
determining activated numbers of User Equipments (UEs) and service loads at a plurality of beam footprints of the satellite base station, in a target detection period;
determining CSI-RS configuration modes corresponding to the plurality of beam footprints based on the activated numbers of UEs and the service loads at the plurality of beam footprints, wherein the CSI-RS configuration modes comprise a periodic CSI-RS configuration and a configuration of CSI-RS transmitted accompanying service transmission; and
determining a CSI-RS configuration mode of the satellite base station according to the CSI-RS configuration modes corresponding to the plurality of beam footprints of the satellite base station.

2. The CSI-RS configuration method according to claim 1, **characterized in that**, the determining CSI-RS configuration modes corresponding to the plurality of beam footprints based on the activated numbers of UEs and the service loads at the plurality of beam footprints comprises:
in a case where an activated number of UEs at a first beam footprint is greater than a preset number, and/or a service load at the first beam footprint is greater than a preset load, determining that a CSI-RS configuration mode corresponding to the first beam footprint is the periodic CSI-RS configuration; or
in a case where the activated number of UEs at the first beam footprint is not greater than the preset number and the service load at the first beam footprint is not greater than the preset load, determining that the CSI-RS configuration mode corresponding to the first beam footprint is the configuration of CSI-RS transmitted accompanying service transmission.

3. The CSI-RS configuration method according to claim 1, **characterized in that**, the determining a CSI-RS configuration mode of the satellite base station according to the CSI-RS configuration modes corresponding to the plurality of beam footprints of the satellite base station comprises:
determining, for the satellite base station, a beam footprint proportion of beam footprints corresponding to the periodic CSI-RS configuration to the plurality of beam footprints;
in a case where the beam footprint proportion is greater than a preset proportion, determining that the CSI-RS configuration mode of the satellite base station is the periodic CSI-RS configuration; or
in a case where the beam footprint proportion is not greater than the preset proportion, determining that the CSI-RS configuration mode of the satellite base station is the configuration of CSI-RS transmitted accompanying service transmission.

4. The CSI-RS configuration method according to claim 1, **characterized in that**, the CSI-RS configuration method further comprises: after determining the CSI-RS configuration mode of the satellite base station,
determining whether the CSI-RS configuration mode of the satellite base station is the same as a current CSI-RS configuration of the satellite base station; and
if not, adjusting the current CSI-RS configuration of the satellite base station.

5. The CSI-RS configuration method according to claim 4, **characterized in that**, the adjusting the current CSI-RS configuration of the satellite base station comprises:
in a case where the CSI-RS configuration mode of the satellite base station is the periodic CSI-RS configuration, adjusting the CSI-RS configuration modes of the plurality of beam footprints of the satellite base station to the periodic CSI-RS configuration, after a first time period; or
in a case where the CSI-RS configuration mode of the satellite base station is the configuration of CSI-RS transmitted accompanying service transmission, adjusting the CSI-RS configuration modes of the plurality of beam footprints of the satellite base station to the configuration of CSI-RS transmitted accompanying service transmission, after a second time period.

6. The CSI-RS configuration method according to claim 5, **characterized in that**, the CSI-RS configuration modes of the plurality of beam footprints of the satellite base station are adjusted to the periodic CSI-RS configuration and the CSI-RS configuration method further comprises:
determining periodic CSI-RS resources corresponding to a UE according to ephemeris information and a position of the UE; and
sending the periodic CSI-RS resources to the UE through Radio Resource Control (RRC) reconfiguration.

7. The CSI-RS configuration method according to claim 5, **characterized in that**, the CSI-RS configuration modes of the plurality of beam footprints of the satellite base station are adjusted to the configuration of CSI-RS transmitted accompanying service transmission and the CSI-RS configuration method further comprises:
sending frequency information of CSI-RS to a UE through RRC reconfiguration, and sending a sending time of the CSI-RS to the UE through Downlink Control Information (DCI).

8. The CSI-RS configuration method according to any of claims 1-7, **characterized in that**, the CSI-RS configuration method further comprises: before the determining activated numbers of UEs and service loads at a plurality of beam footprints of the satellite base station, in a target detection period,
determining whether historical configuration information exists, in response to the satellite base station is turned on;
in a case where the historical configuration information exists and a current time is in a historical detection period in the historical configuration information, configuring the satellite base station to a CSI-RS configuration mode corresponding to the historical configuration information; or
in a case where the historical configuration information does not exist, or the current time is not in the historical detection period in the historical configuration information, configuring the satellite base station to a preset CSI-RS configuration mode.

9. A Channel State Information Reference Signal (CSI-RS) configuration method, **characterized by** applied to a UE, comprising:
reporting a Channel Quality Indicator (CQI) to a satellite base station based on a CSI-RS configuration mode of the satellite base station;
wherein the satellite base station determines the CSI-RS configuration mode by:
determining activated numbers of User Equipments (UEs) and service loads at a plurality of beam footprints of the satellite base station, in a target detection period;
determining CSI-RS configuration modes corresponding to the plurality of beam footprints based on the activated numbers of UEs and the service loads at the plurality of beam footprints, wherein the CSI-RS configuration modes comprise a periodic CSI-RS configuration and a configuration of CSI-RS transmitted accompanying service transmission; and
determining the CSI-RS configuration mode of the satellite base station according to the CSI-RS configuration modes corresponding to the plurality of beam footprints of the satellite base station.

10. The CSI-RS configuration method according to claim 9, **characterized in that**, further comprising:
in a case where the CSI-RS configuration mode is the periodic CSI-RS configuration, before reporting the CQI to the satellite base station, receiving periodic CSI-RS resources sent by the satellite base station through Radio Resource Control (RRC) reconfiguration; wherein the periodic CSI-RS resources is determined by the satellite base station according to ephemeris information and a position of the UE.

11. The CSI-RS configuration method according to claim 9, **characterized in that**, further comprising: in a case where the CSI-RS configuration mode is the configuration of CSI-RS transmitted accompanying service transmission, before reporting the CQI to the satellite base station, receiving frequency information of CSI-RS sent by the satellite base station through RRC)reconfiguration; and receiving a sending time of the CSI-RS sent by the satellite base station through Downlink Control Information (DCI).

12. A CSI-RS configuration apparatus, **characterized by** applied to a satellite base station, comprising:
a beam footprint information determining module configured to, determine activated numbers of User Equipments (UEs) and service loads at a plurality of beam footprints of the satellite base station, in a target detection period;
a beam footprint configuration determining module configured to, determine CSI-RS configuration modes corresponding to the plurality of beam footprints based on the activated numbers of UEs and the service loads at the plurality of beam footprints, wherein the CSI-RS configuration modes comprise a periodic CSI-RS configuration and a configuration of CSI-RS transmitted accompanying service transmission; and
a CSI-RS configuring module configured to, determine a CSI-RS configuration mode of the satellite base station according to the CSI-RS configuration modes corresponding to the plurality of beam footprints of the satellite base station.

13. A CSI-RS configuration apparatus, **characterized by** applied to a UE, comprising:
a reporting module configured to, report a Channel Quality Indicator (CQI) to a satellite base station based on a CSI-RS configuration mode of the satellite base station;
wherein the satellite base station determines the CSI-RS configuration mode by:
determining activated numbers of User Equipments (UEs) and service loads at a plurality of beam footprints of the satellite base station, in a target detection period;
determining CSI-RS configuration modes corresponding to the plurality of beam footprints based on the activated numbers of UEs and the service loads at the plurality of beam footprints, wherein the CSI-RS configuration modes comprise a periodic CSI-RS configuration and a configuration of CSI-RS transmitted accompanying service transmission; and
determining the CSI-RS configuration mode of the satellite base station according to the CSI-RS configuration modes corresponding to the plurality of beam footprints of the satellite base station.

14. A satellite base station, **characterized by** comprising at least one processor and at least one memory, wherein the least one memory stores a computer program which, when executed by the least one processor, causes the least one processor to perform the method according to any of claims 1-8.

15. A UE, **characterized by** comprising: at least one processor and at least one memory, wherein the at least one memory stores a computer program which, when executed by the at least one processor, causes the at least one processor to perform the CSI-RS configuration method according to any of claims 9-11.

16. A computer-readable storage medium **characterized by** having stored thereon a computer program executable by a processor which, when running on a computer, causes the computer to perform the CSI-RS configuration method according to any of claims 1-8 or 9-11.
